# EUROPEAN PATENT APPLICATION

(11) **EP 4 841 707 A1**
(43) Date of publication of application: **18.11.2026**
(21) Application number: 26177871.6
(22) Date of filing: 11.05.2026
(51) Int. Cl.: H01M 4/38, H01M 4/04, H01M 4/36, H01M 4/48, H01M 4/60, H01M 4/62, H01M 4/134, H01M 4/587, H01M 4/1391, H01M 4/1393, H01M 4/1395, H01M 10/052, H01M 4/02

(54) **SILICON-BASED COMPOSITE MATERIAL, METHOD OF PREPARING SAME, ELECTROCHEMICAL DEVICE AND ELECTRONIC APPARATUS**

(30) Priority: 15.05.2025 CN 202510629281
(71) Applicant: AESC Japan Ltd., Yokohama-shi, Kanagawa 220-0012 (JP)
(72) Inventor: LIU, Mingqian, Jiangyin City, Wuxi City (CN)
(74) Representative: Becker, Eberhard

(57) **Abstract**

A silicon-based composite material, a method of preparing the same, an electrochemical device, and an electronic apparatus are provided. The silicon-based composite material includes a core-shell structure including a core and a shell coating a surface of the core. The shell includes a first coating layer, a second coating layer, and a third coating layer in order from inside to outside. The core is a silicon-containing particle. The first coating layer includes amorphous carbon, the second coating layer includes graphite, and the third coating layer includes a conductive polymer. Through the silicon-based composite material, volume swelling can be effectively alleviated and improved electrical conductivity is provided, so an electrochemical device (especially a lithium-ion battery) using the silicon-based composite material to act as the negative electrode material is able to achieve both improved initial Coulombic efficiency and cycle performance.

## Description

### BACKGROUND

### Technical Field

The disclosure relates to a silicon-based composite material, a method of preparing the same, an electrochemical device, and an electronic apparatus.

### Description of Related Art

Lithium-ion batteries, as a mainstream chemical energy source, have been widely applied in energy storage systems, electric vehicles, and portable electronic apparatuses due to their high energy density, low self-discharge rate, and long cycle life. The negative electrode, as one of the most critical components of a battery, plays a key role in the electrochemical performance of the battery, especially in energy density. Graphite is widely used in commercial lithium-ion batteries due to its high electrical conductivity, good reversibility, and low costs. However, the specific capacity of graphite is relatively low, with a theoretical specific capacity of only 372 mAh/g, so it is difficult for graphite to satisfy the application scenarios of batteries with high energy density and high performance. Therefore, there is an urgent need to develop new negative electrode materials for next-generation lithium-ion batteries. Silicon, as the second most abundant element in the earth's crust, has a theoretical specific capacity of approximately 4200 mAh/g, which is more than ten times higher than that of graphite. Further, the lithiation voltage plateau of silicon negative electrodes (~0.4 V vs. Li⁺/Li) is higher than that of graphite negative electrodes (~0.05 V vs. Li⁺/Li). As such, unnecessary lithium deposition and potential dendrite formation are avoided, safety hazards are mitigated, and the high energy density and safety performance of batteries can be effectively balanced. Silicon is therefore considered one of the most promising negative electrode materials.

However, silicon-containing negative electrode materials also have many problems in applications. Unlike the lithium storage behavior of graphite intercalation/deintercalation, the lithium storage process of silicon is accomplished through an alloying reaction. Silicon undergoes structural transformation during charge and discharge, where crystalline silicon evolves into an amorphous Li-Si alloy and then into amorphous silicon. The drastic structural changes cause the silicon negative electrode to undergo large volume changes (>300%) during lithiation/delithiation, which makes silicon unable to withstand excessive stress during charge and discharge, leading to particle cracking and detachment. The volume swelling also causes the SEI film to continuously break and repair, so a large amount of active lithium is consumed, resulting in low Coulombic efficiency. In addition, silicon, as a semiconductor material, has low electrical conductivity, which leads to poor electron and ion transport performance during long-term cycling, so that cycle performance of the battery is low.

### SUMMARY

**In** order to solve the problems of low electrical conductivity and volume swelling of silicon negative electrode materials of the related art, which result in low Coulombic efficiency and poor cycle performance of batteries, the disclosure provides a silicon-based composite material, a method of preparing the same, an electrochemical device, and an electronic apparatus. The silicon-based composite material is able to effectively alleviate volume swelling and provides improved electrical conductivity, so an electrochemical device (especially a lithium-ion battery) using the silicon-based composite material to act as the negative electrode material is able to achieve improved initial Coulombic efficiency and cycle performance.

To accomplish the foregoing purposes, the following technical solutions are adopted by the disclosure.

**In** the first aspect, the disclosure provides a silicon-based composite material including a core-shell structure, and the core-shell structure includes a core and a shell coating a surface of the core. The shell includes a first coating layer, a second coating layer, and a third coating layer in order from inside to outside. The core is a silicon-containing particle. The first coating layer includes amorphous carbon, the second coating layer includes graphite, and the third coating layer includes a conductive polymer.

**In** the second aspect, the disclosure provides a method of preparing a silicon-based composite material, and the method includes the following steps.

**In** S1, spray drying is performed on a first slurry to obtain a first precursor. The first slurry includes silicon-containing particles, a carbon source of amorphous carbon, and a first solvent.

**In** S2, carbonization is performed on the first precursor under an inert atmosphere, and sintering is performed in the presence of a graphite carbon source gas to obtain a second precursor.

**In** S3, the second slurry is subjected to a polymerization reaction to obtain the silicon-based composite material. The second slurry includes the second precursor, a monomer of a conductive polymer, an initiator, and a second solvent.

**In** the third aspect, the disclosure provides a silicon-based composite material prepared by the above-mentioned method of preparing the silicon-based composite material.

**In** the fourth aspect, the disclosure provides an electrochemical device having a negative electrode sheet including the above-mentioned silicon-based composite material.

**In** the fifth aspect, the disclosure provides an electronic apparatus including the above-mentioned electrochemical device.

The positive progress effects provided by the disclosure include the following.

**In** the disclosure, a silicon-based composite material is obtained by a first coating layer including amorphous carbon, a second coating layer including graphite, and a third coating layer including a conductive polymer in order from inside to outside on the surface of silicon-containing particle. Through the silicon-based composite material, volume swelling can be effectively alleviated and improved electrical conductivity is provided, so an electrochemical device (especially a lithium-ion battery) using the silicon-based composite material to act as the negative electrode material is able to achieve both improved initial Coulombic efficiency and cycle performance.

### BRIEF DESCRIPTION OF THE DRAWINGS

**FIGURE** is a flow chart of a method of preparing a silicon-based composite material in Examples 1 to 18 of the disclosure.

### DESCRIPTION OF THE EMBODIMENTS

**The** disclosure will be further described in the following paragraphs through examples, but the disclosure is not limited to the scope of the examples. For the experimental methods that do not specify specific conditions in the following examples, selection is made according to conventional methods and conditions or according to the product instructions.

### Silicon-based Composite Material

**In** the first aspect, the disclosure provides a silicon-based composite material including a core-shell structure, and the core-shell structure includes a core and a shell coating a surface of the core. The shell includes a first coating layer, a second coating layer, and a third coating layer in order from inside to outside. The core is a silicon-containing particle. The first coating layer includes amorphous carbon, the second coating layer includes graphite, and the third coating layer includes a conductive polymer.

**In** the silicon-based composite material of the disclosure, the silicon-containing particle is coated with multiple layers and forms a double-layer carbon matrix composed of an inner layer containing amorphous carbon and an intermediate layer containing graphite. The advantages are as follows. The inner layer of amorphous carbon is rich in pores, which buffers the volume change of the silicon-containing particle while promoting rapid diffusion of lithium ions. The intermediate layer of graphite may significantly improve electronic conductivity, reduce mechanical stress/strain, and prevent material fracture. The synergistic effect of the double-layer carbon matrix may significantly reduce the transport resistance of electrons and ions and buffer the volume swelling of the silicon-containing particle. Based on the above, the advantage of the outermost layer containing the conductive polymer is that it may form a three-dimensional conductive network structure with high conductivity on the material surface, further improving the conductivity while serving as a carrier to accommodate the volume change of the silicon-containing particle during charge and discharge. In this way, volume swelling is further further alleviated, and the silicon-containing particle is prevented from detaching from the current collector.

**In** the disclosure, the "silicon-containing particle" refers to a particle containing silicon element.

In some optional embodiments, the silicon-containing particle is elemental silicon and/or silicon oxide.

The silicon oxide refers to a compound obtained from silicon element and oxygen element, which may be expressed as SiOx (0<x≤2).

The elemental silicon refers to a silicon simple substance with a purity of 99% or greater.

In some optional embodiments, the conductive polymer includes one or more of poly(3,4-ethylenedioxythiophene) (PEDOT), polyaniline, and polypyrrole.

In some optional embodiments, a particle size of the core is 30 nm to 200 nm, preferably 50 nm to 100 nm, for example, 32 nm, 74 nm, 75 nm, 77 nm, 78 nm, 79 nm, 80 nm, 81 nm, 83 nm, 84 nm, 85 nm, or 195 nm.

In the disclosure, the particle size of the core refers to a longest distance between any two points on a contour line of a core portion in the core-shell structure.

In some optional embodiments, a thickness of the first coating layer is 10 nm to 30 nm, preferably 12 nm to 24 nm, for example, 14 nm, 15 nm, 16 nm, 17 nm, 18 nm, 19 nm, or 20 nm.

In some optional embodiments, a thickness of the second coating layer is 2 nm to 15 nm, for example, 5 nm, 6 nm, 7 nm, 8 nm, 9 nm, 10 nm, 11 nm, 12 nm, or 13 nm.

In some optional embodiments, a thickness of the third coating layer is 50 nm to 200 nm, preferably 50 nm to 130 nm, for example, 58 nm, 65 nm, 70 nm, 78 nm, 79 nm, 84 nm, 88 nm, 93 nm, 98 nm, 103 nm, 105 nm, 108 nm, 112 nm, 119 nm, or 127 nm.

**In** some optional embodiments, a ratio of the particle size of the core, the thickness of the first coating layer, the thickness of the second coating layer, and the thickness of the third coating layer is 1:(0.05-1):(0.01-0.6):(0.5-5), preferably 1:(0.05-1):(0.01-0.6):(0.5-2.5), for example, 1:0.23:0.10:1, 1:0.16:0.13:0.93, 1:0.29:0.06:1.17, 1:0.63:0.31:2.03, 1:0.08:0.04:0.55, 1:0.22:0.14:1.08, 1:0.17:0.12:0.95, 1:0.20:0.15:1.16, 1:0.25:0.12:1.14, 1:0.22:0.16:1.27, 1:0.21:0.11:0.73, 1:0.21:0.12:1.40, 1:0.27:0.11:0.88, 1:0.21:0.14:1, 1:0.24:0.11:0.89, 1:0.21:0.09:1.59, 1:0.23:0.08:1.31, or 1:0.16:0.13:1.32.

**In** some specific embodiments, in the silicon-based composite material, the particle size of the core is 78 nm, the thickness of the first coating layer is 18 nm, the thickness of the second coating layer is 8 nm, and the thickness of the third coating layer is 78 nm.

**In** some specific embodiments, in the silicon-based composite material, the particle size of the core is 75 nm, the thickness of the first coating layer is 12 nm, the thickness of the second coating layer is 10 nm, and the thickness of the third coating layer is 70 nm.

**In** some specific embodiments, in the silicon-based composite material, the particle size of the core is 84 nm, the thickness of the first coating layer is 24 nm, the thickness of the second coating layer is 5 nm, and the thickness of the third coating layer is 98 nm.

**In** some specific embodiments, in the silicon-based composite material, the particle size of the core is 32 nm, the thickness of the first coating layer is 20 nm, the thickness of the second coating layer is 10 nm, and the thickness of the third coating layer is 65 nm.

**In** some specific embodiments, in the silicon-based composite material, the particle size of the core is 195 nm, the thickness of the first coating layer is 15 nm, the thickness of the second coating layer is 7 nm, and the thickness of the third coating layer is 108 nm.

**In** some specific embodiments, in the silicon-based composite material, the particle size of the core is 78 nm, the thickness of the first coating layer is 17 nm, the thickness of the second coating layer is 11 nm, and the thickness of the third coating layer is 84 nm.

**In** some specific embodiments, in the silicon-based composite material, the particle size of the core is 83 nm, the thickness of the first coating layer is 14 nm, the thickness of the second coating layer is 10 nm, and the thickness of the third coating layer is 79 nm.

**In** some specific embodiments, in the silicon-based composite material, the particle size of the core is 80 nm, the thickness of the first coating layer is 16 nm, the thickness of the second coating layer is 12 nm, and the thickness of the third coating layer is 93 nm.

**In** some specific embodiments, in the silicon-based composite material, the particle size of the core is 77 nm, the thickness of the first coating layer is 19 nm, the thickness of the second coating layer is 9 nm, and the thickness of the third coating layer is 88 nm.

**In** some specific embodiments, in the silicon-based composite material, the particle size of the core is 81 nm, the thickness of the first coating layer is 18 nm, the thickness of the second coating layer is 13 nm, and the thickness of the third coating layer is 103 nm.

**In** some specific embodiments, in the silicon-based composite material, the particle size of the core is 80 nm, the thickness of the first coating layer is 17 nm, the thickness of the second coating layer is 9 nm, and the thickness of the third coating layer is 58 nm.

**In** some specific embodiments, in the silicon-based composite material, the particle size of the core is 85 nm, the thickness of the first coating layer is 18 nm, the thickness of the second coating layer is 10 nm, and the thickness of the third coating layer is 119 nm.

**In** some specific embodiments, in the silicon-based composite material, the particle size of the core is 74 nm, the thickness of the first coating layer is 20 nm, the thickness of the second coating layer is 8 nm, and the thickness of the third coating layer is 65 nm.

**In** some specific embodiments, in the silicon-based composite material, the particle size of the core is 77 nm, the thickness of the first coating layer is 16 nm, the thickness of the second coating layer is 11 nm, and the thickness of the third coating layer is 78 nm.

**In** some specific embodiments, in the silicon-based composite material, the particle size of the core is 79 nm, the thickness of the first coating layer is 19 nm, the thickness of the second coating layer is 9 nm, and the thickness of the third coating layer is 70 nm.

**In** some specific embodiments, in the silicon-based composite material, the particle size of the core is 80 nm, the thickness of the first coating layer is 17 nm, the thickness of the second coating layer is 7 nm, and the thickness of the third coating layer is 127 nm.

**In** some specific embodiments, in the silicon-based composite material, the particle size of the core is 80 nm, the thickness of the first coating layer is 18 nm, the thickness of the second coating layer is 6 nm, and the thickness of the third coating layer is 105 nm.

**In** some specific embodiments, in the silicon-based composite material, the particle size of the core is 85 nm, the thickness of the first coating layer is 14 nm, the thickness of the second coating layer is 11 nm, and the thickness of the third coating layer is 112 nm.

### Method of Preparing Silicon-based Composite Material

**In** the second aspect, the disclosure provides a method of preparing a silicon-based composite material, and the method includes the following steps.

**In** S1, spray drying is performed on a first slurry to obtain a first precursor, where the first slurry includes silicon-containing particles, a carbon source of amorphous carbon, and a first solvent.

**In** S2, carbonization is performed on first precursor under an inert atmosphere, and sintering is performed in the presence of a graphite carbon source gas to obtain a second precursor.

**In** S3, the second slurry is subjected to a polymerization reaction to obtain the silicon-based composite material, where the second slurry includes the second precursor, a monomer of a conductive polymer, an initiator, and a second solvent.

**In** some optional embodiments, in step S1, the silicon-containing particle is elemental silicon and/or silicon oxide.

**In** some optional embodiments, in step S1, a particle size Dv50 of the silicon-containing particle is 30 nm to 200 nm, for example, 80 nm.

**In** the disclosure, in step S1, the particle size Dv50 of the silicon-containing particle refers to a particle diameter corresponding to a cumulative volume distribution of 50% on a particle size distribution curve of the silicon-containing particle.

**In** some optional embodiments, in step S1, the carbon source of the amorphous carbon includes one or more of sucrose, glucose, maltose, lactose, chitosan, starch, phenolic resin, epoxy resin, cellulose, lignin, polyvinyl alcohol, polyvinyl chloride, polyethylene oxide, polyurethane, citric acid, and cyclodextrin.

**In** some embodiments, in step S1, the carbon source of the amorphous carbon is glucose, phenolic resin, cellulose, or polyvinyl alcohol.

**In** some optional embodiments, in step S1, the first solvent includes one or more of water, methanol, ethanol, isopropanol, tetrahydrofuran, acetonitrile, dichloromethane, chloroform, DMF, DMSO, NMP, acetone, and ethyl acetate, for example, water.

In some optional embodiments, in step S1, a mass ratio of the silicon-containing particle to the carbon source of the amorphous carbon is 1:(0.5-5), for example, 1:2.

**In** the disclosure, in step S1, the first slurry may be prepared by a conventional method in the art.

**In** some optional embodiments, in step S1, the method of preparing the first slurry includes ultrasonically dispersing the silicon-containing particle and the carbon source of the amorphous carbon in the first solvent.

**In** some optional embodiments, in step S1, an inlet temperature of the spray drying is 180°C to 250°C, a fan frequency is 20 Hz to 40 Hz, and a feed rate is 5 mL/min to 15 mL/min.

In some specific embodiments, in step S1, the inlet temperature of the spray drying is 200°C, the fan frequency is 30 Hz, and the feed rate is 10 mL/min.

In some optional embodiments, in step S2, the inert atmosphere is nitrogen or argon.

In some optional embodiments, in step S2, a temperature of the carbonization is 800°C to 1200°C, for example, 900°C.

In some optional embodiments, in step S2, time of the carbonization is 180 min to 240 min, for example 200 min.

In some optional embodiments, in step S2, the graphite carbon source gas includes one or more of alkane, alkene, and alkyne gases.

In the disclosure, the graphite carbon source gas refers to a carbon source gas that may be sintered at a high temperature, such as 600°C to 1000°C, to obtain graphite.

In some specific embodiments, in step S2, the graphite carbon source gas is acetylene or propylene.

In some optional embodiments, in step S2, a temperature of the sintering is 600°C to 1000°C, for example, 700°C.

In some optional embodiments, in step S2, time of the sintering is 90 min to 180 min, for example 120 min. In the disclosure, the time of the sintering refers to the time for heat preservation at the temperature of the sintering.

In some optional embodiments, in step S2, a volume flow rate of the graphite carbon source gas is 10 sccm to 150 sccm, for example, 40 sccm, where sccm refers to a volume of gas passing per minute under standard conditions (usually 0°C and 1 atmosphere), in units of cubic centimeters (cm³).

In some optional embodiments, in step S2, washing and drying are performed after the sintering. The washing and drying may be performed in a conventional manner in the art.

In some optional embodiments, the washing includes suction filtration and washing with water. The suction filtration and washing are performed at least three times. The water is, for example, deionized water.

In some optional embodiments, the drying includes placement at 80°C for 12 h. The drying may be performed in an oven.

In some optional embodiments, in step S3, the monomer of the conductive polymer includes one or more of 3,4-ethylenedioxythiophene, aniline, and pyrrole.

In some optional embodiments, in step S3, the initiator includes one or more of ammonium persulfate, sodium persulfate, and ferric chloride, for example, ammonium persulfate.

In some embodiments, in step S3, the monomer of the conductive polymer is 3,4-ethylenedioxythiophene, and the initiator is ammonium persulfate.

In some embodiments, in step S3, the monomer of the conductive polymer is aniline, and the initiator is ammonium persulfate.

In some embodiments, in step S3, the monomer of the conductive polymer is pyrrole, and the initiator is ammonium persulfate.

In some preferred embodiments, in the method of preparing the silicon-based composite material, the silicon-containing particle is elemental silicon and/or silicon oxide, the carbon source of the amorphous carbon is one or more of glucose, phenolic resin, cellulose, and polyvinyl alcohol, the graphite carbon source gas is acetylene and/or propylene, and the monomer of the conductive polymer is one or more of 3,4-ethylenedioxythiophene, aniline, and pyrrole.

In some specific embodiments, in the method of preparing the silicon-based composite material, the silicon-containing particle is elemental silicon, the carbon source of the amorphous carbon is glucose, the graphite carbon source gas is acetylene, and the monomer of the conductive polymer is 3,4-ethylenedioxythiophene.

In some specific embodiments, in the method of preparing the silicon-based composite material, the silicon-containing particle is silicon oxide, the carbon source of the amorphous carbon is glucose, the graphite carbon source gas is acetylene, and the monomer of the conductive polymer is 3,4-ethylenedioxythiophene.

In some specific embodiments, in the method of preparing the silicon-based composite material, the silicon-containing particle is elemental silicon, the carbon source of the amorphous carbon is glucose, the graphite carbon source gas is acetylene, and the monomer of the conductive polymer is aniline.

In some specific embodiments, in the method of preparing the silicon-based composite material, the silicon-containing particle is elemental silicon, the carbon source of the amorphous carbon is glucose, the graphite carbon source gas is acetylene, and the monomer of the conductive polymer is pyrrole.

In some specific embodiments, in the method of preparing the silicon-based composite material, the silicon-containing particle is elemental silicon, the carbon source of the amorphous carbon is glucose, the graphite carbon source gas is propylene, and the monomer of the conductive polymer is 3,4-ethylenedioxythiophene.

In some specific embodiments, in the method of preparing the silicon-based composite material, the silicon-containing particle is elemental silicon, the carbon source of the amorphous carbon is phenolic resin, the graphite carbon source gas is acetylene, and the monomer of the conductive polymer is 3,4-ethylenedioxythiophene.

In some specific embodiments, in the method of preparing the silicon-based composite material, the silicon-containing particle is elemental silicon, the carbon source of the amorphous carbon is cellulose, the graphite carbon source gas is acetylene, and the monomer of the conductive polymer is 3,4-ethylenedioxythiophene.

In some specific embodiments, in the method of preparing the silicon-based composite material, the silicon-containing particle is elemental silicon, the carbon source of the amorphous carbon is polyvinyl alcohol, the graphite carbon source gas is acetylene, and the monomer of the conductive polymer is 3,4-ethylenedioxythiophene.

In some optional embodiments, a mass-to-volume ratio of the second precursor to the monomer of the conductive polymer is 1g:(0.5 mL-3 mL), for example, 1 g:2 mL.

In some optional embodiments, the mass ratio of the second precursor to the initiator is 1:(1.5-5), for example, 1:2.

In some optional embodiments, the second solvent is deionized water.

In the disclosure, in step S3, the second slurry may be prepared by a conventional method in the art.

In some optional embodiments, in step S3, the method of preparing the second slurry includes that the second precursor is first ultrasonically dispersed in the second solvent, and then the monomer of the conductive polymer and the initiator are added sequentially.

In some optional embodiments, the polymerization reaction is carried out under stirring conditions, and a stirring speed is preferably 200 r/min to 800 r/min, for example, 700 r/min.

In some optional embodiments, a temperature of the polymerization reaction is room temperature.

In some optional embodiments, time of the polymerization reaction is 8 h to 14 h, for example 12 h.

In some optional embodiments, washing and drying are performed after the polymerization reaction. The washing and drying may be performed in a conventional manner in the art.

In some optional embodiments, the washing includes suction filtration and washing with water. The suction filtration and washing are performed at least three times. The water is, for example, deionized water.

In some optional embodiments, the drying includes placement at 80°C for 12 h. The drying may be performed in an oven.

### Silicon-based Composite Material

In the third aspect, the disclosure provides a silicon-based composite material prepared by the method of preparing the silicon-based composite material as described in the foregoing paragraphs.

The structure and composition of the silicon-based composite material are as defined in the first aspect of the disclosure, so description thereof is not repeated herein.

### Electrochemical Device

**In** the fourth aspect, the disclosure provides an electrochemical device having a negative electrode sheet including the silicon-based composite material as described in the foregoing embodiments.

**In** the disclosure, the electrochemical device is preferably a battery.

**In** an optional embodiment, the electrochemical device is a lithium-ion battery. The lithium-ion battery includes a negative electrode sheet, a positive electrode sheet, a separator, and an electrolyte, and the negative electrode sheet includes the silicon-based composite material as described in the foregoing embodiments.

### Negative Electrode Sheet

**In** the disclosure, the negative electrode sheet may include a negative electrode current collector and a negative electrode material layer, and the negative electrode material layer is disposed on at least one surface of the negative electrode current collector. The negative electrode material layer includes a negative electrode material, and the negative electrode material includes the silicon-based composite material as described in the foregoing paragraphs.

**In** some embodiments, the negative electrode material layer further includes a conductive agent.

Herein, the conductive agent is not particularly limited as long as it has conductivity and does not cause chemical changes in the battery. For instance, graphite (e.g., natural graphite or artificial graphite), carbon-based materials (e.g., carbon black, acetylene black, Ketjen black, channel black, furnace black, lamp black, thermal black, or carbon fibers), metal powders or metal fibers (e.g., copper, nickel, aluminum, or silver), conductive whiskers (e.g., zinc oxide whiskers or potassium titanate whiskers), conductive metal oxides (e.g., titanium dioxide), or conductive polymers (e.g., polyphenylene derivatives) may be used.

**In** some specific embodiments, the conductive agent is acetylene black.

**In** some embodiments, the negative electrode material layer further includes a binder.

The type of the binder is not particularly limited and may be optionally selected from polyvinylidene fluoride, polyvinylidene fluoride, polyvinyl alcohol, carboxymethyl cellulose, starch, hydroxypropyl cellulose, regenerated cellulose, polyvinylpyrrolidone, polytetrafluoroethylene, polyethylene, polypropylene, polyacrylic acid (PAA), ethylenepropylene-diene terpolymer and its sulfonates, styrene-butadiene rubber (SBR), fluororubber, and various copolymers.

**In** some specific embodiments, the binder is polyacrylic acid.

**In** some specific embodiments, in the negative electrode material layer, a mass ratio of the silicon-based composite material, the conductive agent, and the binder is 8:1:1.

**In** the disclosure, the negative electrode current collector may be a conventional negative electrode current collector in the art. The negative electrode current collector serves as a substrate supporting the negative electrode material layer and is generally a metal foil having a thickness of 3 µm to 500 µm. There is no particular limitation on a material of the negative electrode current collector, as long as the material has high electrical conductivity and does not produce chemical reactions in the system of the secondary battery. For instance, the material may be a foil material obtained by surface-treating nickel, titanium, aluminum, nickel, silver, stainless steel, carbon, or the like. The negative electrode current collector generally has a smooth surface, but fine textures or the like may also be formed on the surface thereof to improve the adhesion between the negative electrode material layer and the negative electrode current collector. In addition to foil, the negative electrode current collector may also adopt any one or a combination of various forms such as film, mesh, porous, foam, or non-woven fabric. Generally, the negative electrode current collector is a copper foil.

**In** some embodiments, the method of preparing the negative electrode sheet includes the following steps. A negative electrode slurry, obtained by thoroughly stirring and mixing all components of the negative electrode material layer in a solvent until uniform, is coated onto at least one surface of the negative electrode current collector, followed by drying and slitting.

### Positive Electrode Sheet

**In** some embodiments, the positive electrode sheet is a lithium sheet.

**In** some other embodiments, the positive electrode sheet may include a positive electrode current collector and a positive electrode material layer disposed on at least one surface of the positive electrode current collector.

**In** the disclosure, a positive electrode active material in the positive electrode material layer may be a positive electrode active material conventionally used in the art, for example, one or more of lithium nickel cobalt manganese oxide, lithium nickel manganese oxide, lithium iron phosphate, lithium manganese iron phosphate, and lithium cobalt oxide.

**In** some optional embodiments, the positive electrode material layer further includes a binder.

The type of the binder is not particularly limited and may be optionally selected from polyvinylidene fluoride, polyvinylidene fluoride (PVDF), polyvinyl alcohol, carboxymethyl cellulose, starch, hydroxypropyl cellulose, regenerated cellulose, polyvinylpyrrolidone, polytetrafluoroethylene, polyethylene, polypropylene, polyacrylic acid (PAA), ethylenepropylene-diene terpolymer and its sulfonates, styrene-butadiene rubber (SBR), fluororubber, and various copolymers.

**In** some optional embodiments, the positive electrode material layer further includes a conductive agent.

Herein, the type of the conductive agent is not particularly limited and is a reagent used to ensure that the electrode has good charge and discharge performance. It may be optionally selected from graphite-based materials such as natural graphite and artificial graphite, carbon black-based materials such as carbon black SP, acetylene black, Ketjenblack, channel black, furnace black, lamp black, and thermal black, conductive fibers such as carbon fiber and metal fiber, metal powders such as carbon fluoride powder, aluminum powder, and nickel powder, conductive whiskers such as zinc oxide and potassium titanate, and conductive metal oxides such as titanium dioxide or polyphenylene derivatives.

**In** the disclosure, the positive electrode current collector may be a conventional positive electrode current collector in the art. The positive electrode current collector serves as a substrate supporting the positive electrode material layer and is generally a metal foil having a thickness of 3 µm to 500 µm. There is no particular limitation on the material of the current collector, as long as the material has high electrical conductivity and does not produce chemical reactions in the system of the secondary battery. For example, the material may be a foil material obtained by surface-treating nickel, titanium, aluminum, nickel, silver, stainless steel, carbon, or the like. The positive electrode current collector generally has a smooth surface, but fine textures or the like may also be formed on the surface thereof to improve the adhesion between the positive electrode material layer and the positive electrode current collector. In addition to foil, the positive current collector may also be used in any one or a combination of various forms such as film, mesh, porous, foam, or non-woven fabric. Generally, the positive electrode current collector is an aluminum foil.

**In** some embodiments, the method of preparing the positive electrode sheet includes the following. A positive electrode slurry, obtained by thoroughly stirring and mixing all components of the positive electrode material layer in a solvent until uniform, is coated onto at least one surface of the positive electrode current collector, followed by drying and roll pressing, to obtain the positive electrode sheet.

### Separator

In the disclosure, the separator may be a separator conventionally used in the art.

In some optional embodiments, the separator may be a polypropylene film or a polyethylene film.

In a specific embodiment, the separator is a polyethylene film, and a thickness of the separator is 11 µm.

### Electrolyte

In some embodiments, the electrolyte may be an electrolyte conventionally used in batteries in the art and generally includes a non-aqueous solvent, a lithium salt, and an additive.

In the disclosure, the non-aqueous solvent may be a conventional non-aqueous solvent in the art.

In some embodiments, the non-aqueous solvent preferably includes an ester solvent, and more preferably includes a carbonate solvent. The carbonate solvent may optionally be one or more of ethylene carbonate, propylene carbonate, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethyl methyl carbonate (EMC), ethylene carbonate (EC), propylene carbonate (PC), and butylene carbonate (BC). The non-aqueous solvent may further include ethyl acetate.

In the disclosure, the lithium salt may be a conventional lithium salt in the art, such as LiPF₆.

In the disclosure, the additive may be a conventional additive in the art, for example, fluoroethylene carbonate (FEC).

In some embodiments, the electrolyte includes LiPF₆, dimethyl carbonate, ethylene carbonate, and fluoroethylene carbonate.

Herein, a volume ratio of the ethylene carbonate to the dimethyl carbonate is, for example, 1:1.

Herein, a concentration of the lithium salt is, for example, 1 mol/L.

Herein, a mass concentration of the fluoroethylene carbonate is 5 wt%, and the percentage is the mass percentage of the total mass of the electrolyte.

In some embodiments, the electrolyte may be prepared by conventional methods in the art, and optionally, may be prepared by the following method. In an argon atmosphere glove box with a water content of less than 10 ppm, each non-aqueous solvent and additive are mixed according to the ratio, and a sufficiently dried lithium salt is then added and mixed uniformly to obtain the electrolyte.

**In** some embodiments, a method for preparing the lithium-ion battery includes the following steps. In a high-purity argon glove box, the positive electrode sheet, the separator, and the negative electrode sheet are stacked in sequence, with the separator positioned between the positive and negative electrode sheets to serve an isolation function, and then are wrapping with an aluminum-plastic film. The electrolyte is injected after drying, and lastly, a pouch cell is prepared through processes such as packaging, standing, and formation.

### Electronic Apparatus

**In** the fifth aspect, the disclosure provides an electronic apparatus including the above-mentioned electrochemical device.

Exemplarily, the electronic apparatus in the disclosure may be, but not limited to, a mobile apparatus (e.g., a mobile phone, a tablet computer, a notebook computer, a video recorder, a portable printer/copier, etc.), an electric vehicle (e.g., a pure electric vehicle, a hybrid electric vehicle, a plug-in hybrid electric vehicle, an electric bicycle, an electric scooter, an electric golf cart, an electric truck, etc.), a ship, a satellite, an energy storage system, a backup power source, and the like.

On the basis of conforming to common knowledge in the art, the above-mentioned preferred conditions may be combined arbitrarily to obtain the preferred embodiments of the disclosure.

The reagents and raw materials used in the disclosure are all commercially available.

**In** specific embodiments of the disclosure, the silicon-based composite material may be represented as Si@C@Gr@CP, where Si represents the silicon-containing particle, C represents the first coating layer containing amorphous carbon (amorphous carbon layer), Gr represents the second coating layer containing graphite (graphite layer), and CP represents the third coating layer containing a conductive polymer (conductive polymer layer); CP may specifically be a conductive polymer layer containing poly(3,4-ethylenedioxythiophene) (PEDOT), polyaniline, or polypyrrole. Herein, "@" denotes coating; "Si@C" refers to the amorphous carbon layer coating the silicon-containing particle; "Si@C@Gr" refers to the graphite carbon layer coating Si@C, and "Si@C@Gr@CP" refers to the conductive polymer layer coating Si@C@Gr. For instance, "Si@C@Gr@PEDOT" refers to the conductive polymer layer containing PEDOT coating Si@C@Gr, "Si@C@Gr@polyaniline" refers to the conductive polymer layer containing polyaniline coating Si@C@Gr, and "Si@C@Gr@polypyrrole" refers to the conductive polymer layer containing polypyrrole coating Si@C@Gr.

### Example 1

**In** S1, 1.2 g of high-purity silicon powder with a particle size Dv50 of 80 nm and 2.4 g of glucose were weighed, added into deionized water, and ultrasonically dispersed for 1 h to obtain the first slurry. The fan frequency of the spray drying equipment was set to 30 Hz, the inlet temperature was set to 200°C, and the feed rate was set to 10 mL/min. Spray drying was performed on the first slurry. After the spray drying was completed, the first slurry was cooled to room temperature, and a first precursor powder was obtained in a collector.

**In** S2, the above first precursor powder was placed in a tube furnace and heated up to 900°C under argon atmosphere protection for carbonization. The temperature was held for 200 min and then was lowered to 700°C, and the silicon-containing particle coated with an amorphous carbon layer Si@C was obtained. The argon gas was turned off, and acetylene gas (volume flow rate of 40 sccm) was introduced for sintering (700°C). The temperature was held for 120 min and then was cooled to room temperature. A product was repeatedly filtered by suction filtration and washed with deionized water three times and dried in an oven at 80°C for 12 h, and the second precursor Si@C@Gr was obtained.

**In** S3, 1.0 g of Si@C@Gr was weighed, added into deionized water, and ultrasonically dispersed. Subsequently, 2 mL of 3,4-ethylenedioxythiophene was added, and lastly, 2.0 g of ammonium persulfate was added into the reaction system to obtain the second slurry. The second slurry was reacted at room temperature for 12 h at a stirring speed of 700 r/min, repeatedly filtered by suction filtration and washed with deionized water three times after the reaction was completed, and then dried in an oven at 80°C for 12 h, and a product Si@C@Gr@PEDOT was obtained.

### Example 2

The only difference between this example and Example 1 is that in step S1, the mass of high-purity silicon powder was 1.2 g, the mass of glucose was 0.6 g, and the mass ratio of the two was 1:0.5. The remaining conditions are consistent with that of Example 1.

### Example 3

The only difference between this example and Example 1 is that in step S1, the mass of high-purity silicon powder was 1.2 g, the mass of glucose was 6 g, and the mass ratio of the two was 1:5. The remaining conditions are consistent with that of Example 1.

### Example 4

**The** only difference between this example and Example 1 is that in step S1, the particle size Dv50 of the high-purity silicon powder was 30 nm. The remaining conditions are consistent with that of Example 1.

### Example 5

**The** only difference between this example and Example 1 is that in step S1, the particle size Dv50 of the high-purity silicon powder was 200 nm. The remaining conditions are consistent with that of Example 1.

### Example 6

The only difference between this example and Example 1 is that in step S2, the carbonization temperature was 800°C. The remaining conditions are consistent with that of Example 1.

### Example 7

The only difference between this example and Example 1 is that in step S2, the carbonization temperature was 1200°C. The remaining conditions are consistent with that of Example 1.

### Example 8

The only difference between this example and Example 1 is that in step S2, the sintering temperature was 600°C. The remaining conditions are consistent with that of Example 1.

### Example 9

The only difference between this example and Example 1 is that in step S2, the sintering temperature was 1000°C. The remaining conditions are consistent with that of Example 1.

### Example 10

The only difference between this example and Example 1 is that in step S2, the graphite carbon source gas was propylene. The remaining conditions are consistent with that of Example 1.

### Example 11

The only difference between this example and Example 1 is that in step S3, the mass-to-volume ratio of Si@C@Gr to 3,4-ethylenedioxythiophene was 1 g:0.5 mL. The remaining conditions are consistent with that of Example 1.

### Example 12

The only difference between this example and Example 1 is that in step S3, the mass-to-volume ratio of Si@C@Gr to 3,4-ethylenedioxythiophene was 1 g:3 mL. The remaining conditions are consistent with that of Example 1.

### Example 13

The only difference between this example and Example 1 is that in step S1, phenolic resin was used in place of glucose. The remaining conditions are consistent with that of Example 1.

### Example 14

The only difference between this example and Example 1 is that in step S1, cellulose was used in place of glucose. The remaining conditions are consistent with that of Example 1.

### Example 15

The only difference between this example and Example 1 is that in step S1, polyvinyl alcohol was used in place of glucose. The remaining conditions are consistent with that of Example 1.

### Example 16

The only difference between this example and Example 1 is that in step S3, aniline was used in place of 3,4-ethylenedioxythiophene, and a product Si@C@Gr@polyaniline was obtained. The remaining conditions are consistent with that of Example 1.

### Example 17

The only difference between this example and Example 1 is that in step S3, pyrrole was used in place of 3,4-ethylenedioxythiophene, and a product Si@C@Gr@polypyrrole was obtained. The remaining conditions are consistent with that of Example 1.

### Example 18

The only difference between this example and Example 1 is that in step S1, silicon oxide (purchased from Shanghai Putailai New Energy Technology Co., Ltd., model SiO-1800) was used in place of high-purity silicon. The remaining conditions are consistent with that of Example 1.

### Comparative Example 1

In this comparative example, high-purity silicon powder with a particle size Dv50 of 80 nm was directly used as the negative electrode material.

### Comparative Example 2

In this comparative example, the difference from Example 1 lies in that amorphous carbon coating was not performed. The specific preparation method is as follows.
(1) Coating graphite layer: 1.2 g of high-purity silicon powder with a particle size Dv50 of 80 nm was placed in a tube furnace and heated to 700°C under an acetylene atmosphere for sintering. The temperature was held for 120 min and then cooled to room temperature. The mixture was repeatedly filtered by suction filtration and washed with deionized water three times and dried in an oven at 80°C for 12 h, and a reaction product Si@Gr was obtained.
(2) Coating PEDOT: 1.0 g of Si@Gr was weighed, added into deionized water, ultrasonically dispersed, and then added with 2 mL of 3,4-ethylenedioxythiophene. Lastly, 2.0 g of ammonium persulfate was added into the reaction system and reacted at room temperature for 12 h at a stirring speed of 700 r/min. After the reaction was completed, the mixture was repeatedly filtered by suction filtration and washed with deionized water three times and dried in an oven at 80°C for 12 h, and a product Si@Gr@PEDOT was obtained.

### Comparative Example 3

**In** this comparative example, the difference from Example 1 lies in that graphite carbon coating was not performed. The specific preparation method is as follows.
**(1)** 1.2 g of high-purity silicon powder with a particle size Dv50 of 80 nm and 2.4 g of glucose were weighed, added into deionized water, and ultrasonically dispersed for 1 h. The fan frequency of the spray drying equipment was set to 30 Hz, the inlet temperature was set to 200°C, and the feed rate was set to 10 mL/min. Spray drying was performed. After the spray drying was completed, the temperature was cooled to room temperature, and a precursor powder was obtained in the collector.
**(2)** Coating an amorphous carbon layer: the above-mentioned precursor powder was placed in a tube furnace and heated to 900°C under the protection of an argon atmosphere for high-temperature carbonization. The temperature was held for 200 min and then cooled to room temperature. The mixture was repeatedly filtered by suction filtration and washed with deionized water three times and dried in an oven at 80°C for 12 h, and a reaction product Si@C was obtained.
**(3)** Coating PEDOT: 1.0 g of Si@C was weighed, added into deionized water, ultrasonically dispersed, and then added with 2 mL of 3,4-ethylenedioxythiophene. Lastly, 2.0 g of ammonium sulfate was added into the reaction system and reacted at room temperature for 12 h at a stirring speed of 700 r/min. After the reaction was completed, the mixture was repeatedly filtered by suction filtration and washed with deionized water three times and dried in an oven at 80°C for 12 h, and a product Si@C@PEDOT was obtained.

### Comparative Example 4

**In** this comparative example, the difference from Example 1 lies in that conductive polymer coating was not performed. The specific preparation method is as follows.
**(1)** 1.2 g of high-purity silicon powder with a particle size Dv50 of 80 nm and 2.4 g of glucose were weighed, added into deionized water, and ultrasonically dispersed for 1 h. The fan frequency of the spray drying equipment was set to 30 Hz, the inlet temperature was set to 200°C, and the feed rate was set to 10 mL/min. Spray drying was performed. After the spray drying was completed, the temperature was cooled to room temperature, and a precursor powder was obtained in the collector.
**(2)** Coating an amorphous carbon layer: the above-mentioned precursor powder was placed in a tube furnace and heated to 900°C under the protection of an argon atmosphere for high-temperature carbonization. The temperature was held for 200 min, and a product Si@C was obtained.
(3) Coating graphite layer: the temperature was then lowered to 700°C, the argon gas was turned off, acetylene gas was introduced, and secondary sintering was performed. The temperature was held for 120 min and then cooled to room temperature. The mixture was repeatedly filtered by suction filtration and washed with deionized water three times and dried in an oven at 80°C for 12 h, and a product Si@Gr was obtained.

### Comparative Example 5:

In this comparative example, the difference from Example 1 lies in that the graphite layer was coated first, and then the amorphous carbon layer was coated.

The specific preparation method includes the following steps:
In S1, coating graphite layer: 1.2 g of high-purity silicon powder with Dv50 of 80 nm was placed in a tube furnace and heated to 700°C with introduction of acetylene gas for sintering. The temperature was held for 120 min and then cooled to room temperature. The mixture was repeatedly filtered by suction filtration and washed with deionized water three times and dried in an oven at 80°C for 12 h, and a product Si@Gr was obtained.
In S2, coating an amorphous carbon layer: Si@Gr and 2.4 g of glucose were added into deionized water and ultrasonically dispersed for 1 h. The fan frequency of the spray drying equipment was set to 30 Hz, the inlet temperature was set to 200°C, and the feed rate was set to 10 mL/min. Spray drying was performed. After the spray drying was completed, the mixture was cooled to room temperature, and a precursor powder was obtained in the collector. The precursor powder was placed in a tube furnace, argon gas was introduced, and the temperature was raised to 900°C for high-temperature carbonization under the protection of an argon atmosphere. The temperature was held for 200 min and then cooled to room temperature. The mixture was repeatedly filtered by suction filtration and washed with deionized water three times and dried in an oven at 80°C for 12 h, and a reaction product Si@Gr@C was obtained.
In S3, coating PEDOT: this step is the same as that of Example 1, and the product Si@Gr@C@PEDOT was obtained.

### Effect Example 1: Parameter Characterization of Silicon-based Composite Material

The silicon-based composite materials in Examples 1 to 18 and Comparative Examples 1 to 5 are tested for the particle size of the core and the thickness of each coating layer specifically as follows.

A transmission electron microscope (TEM, manufacturer: Hitachi, model: HT7800) combined with energy dispersive X-ray fluorescence spectrometer (EDX) are used to characterize the multi-layer coating structure. First, a focused ion beam (FIB) is used to prepare ultra-thin sections of the prepared material, and TEM is used to observe cross-sectional images to distinguish the core, amorphous carbon layer (first coating layer), graphite layer (second coating layer), and conductive polymer layer (third coating layer). Different coating layers may be directly distinguished in the TEM images, or the element distribution may be distinguished with the aid of EDX spectroscopy, which may also better distinguish the boundaries of each coating layer. Next, TEM image analysis software is used to measure the thickness of each coating layer and the particle size of the core. Lastly, EDX is used for elemental analysis to obtain spectral data, determine the elemental composition and relative content of each layer, and perform comprehensive analysis in combination with TEM images.

The specific preparation method of preparing ultrathin sections using a focused ion beam (FIB) includes the following steps.
**1)** The sample is placed in a dual-beam system (FIB-SEM, manufacturer: Zeiss, model: Zeiss Auriga Compact) combining a focused ion beam (FIB) and a scanning electron microscope (SEM). The target area is selected, and a platinum protective layer is deposited on the sample surface through a gas injection system (GIS) to prevent ion beam damage to the surface structure and form clearly visible marker points.
**2)** A high-current gallium ion beam is used to vertically etch from both sides of the sample. A U-shaped groove is formed, and the sample is then tiled to a specific angle, so that the ion beam is perpendicular to the thin section plane, and cutting symmetry is thus ensured. The ion beam current is gradually reduced, and the sample is alternately thinned from both sides for fine cutting.
**3)** The nanomanipulator is moved, so that the tip slowly approaches the sample. Once the needle tip gently contacts the sample, platinum (Pt) deposition is performed on it, so that the sample is welded to the nanomanipulator. After that, the ion beam is used to completely cut off the sample and transfer it to a TEM copper grid. Lastly, Pt is deposited at the contact point between the sample and the TEM grid, and after the connection is secured, the ion beam is used to cut off the connection between the sample and the nanomanipulator needle tip.
**4)** A low-energy ion beam is used to lightly sweep the surface for secondary thinning and finishing, and switching to low voltage is performed for the final cleaning sweep, so as to avoid amorphous contamination generated during the cutting process from affecting the sample.

Based on the TEM testing described above, the testing methods for the particle size of the core and the thicknesses of the first coating layer, the second coating layer, and the third coating layer in the silicon-based composite material obtained in each example and comparative example are as follows.

10 TEM images of different regions are photographed separately (300K magnification, 1 µm × 1 µm). The particle size of the core and the thickness of each coating layer are measured (e.g., the nano measurer tool may be used), the particle size and thickness data are collected, and the average values are calculated as the particle size of the core and the thickness of each coating layer. The thickness of each coating layer is based on the maximum thickness of the same coating layer, and the particle size of the core is the longest distance between any two points on the contour line of the core portion.

The thickness data of the first coating layer, the second coating layer, and the third coating layer, and the particle size data of the core obtained from the above testing are shown in Table 1.

### Effect Example 2: Electrochemical Performance Testing

### Preparation of Negative Electrode Sheet and Lithium-ion Half-cell

The silicon-based composite materials in Examples 1 to 18 and Comparative Examples 1 to 5 were used as negative electrode materials to prepare the negative electrode sheets and assemble lithium-ion half-cells, respectively, and the specific steps were as follows.

Preparation of negative electrode sheet: The negative electrode material, conductive agent acetylene black, and binder polyacrylic acid (PAA) were mixed with an appropriate amount of water at a mass ratio of 8:1:1 to form a negative electrode slurry. The negative electrode slurry was uniformly coated on the surface of a copper foil (single-side coating, copper foil thickness of 6 µm) and lastly dried under vacuum at 90°C for 12 h. The negative electrode slurry formed a negative electrode material layer (the initial negative electrode material layer thickness was recorded), and a negative electrode sheet was obtained (the diameter of the negative electrode sheet was 14 mm).

Assembly of lithium-ion half-cell: A lithium sheet was used as the counter electrode, and a polyethylene membrane was used as the separator (thickness of the separator: 11 µm). The electrolyte was composed of LiPF₆, ethylene carbonate (EC), dimethyl carbonate (DMC), and fluoroethylene carbonate (FEC), where the volume ratio of EC to DMC was 1:1, the concentration of FEC was 5 wt%, and the concentration of LiPF₆ was 1 mol·L⁻¹. The negative electrode sheet, the lithium sheet, the separator, and the electrolyte described above were encapsulated in a high-purity argon glove box, and a CR2032-type lithium-ion half-cell was obtained.

The lithium-ion half-cells prepared above were subjected to the following electrochemical performance tests.

### (1) Initial Discharge Specific Capacity (Before Activation) and Initial Coulombic Efficiency

At 25°C, one complete charge-discharge cycle was performed at a current density of 0.1 A/g, with a charge cut-off voltage of 1.5 V and a discharge cut-off voltage of 0.01 V. The initial discharge capacity (before activation) and the initial charge capacity (before activation) were recorded. 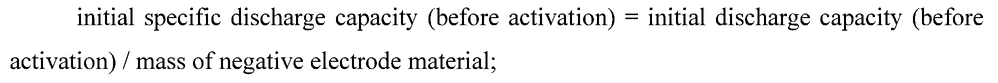 initial specific discharge capacity (before activation) = initial discharge capacity (before activation) / mass of negative electrode material; 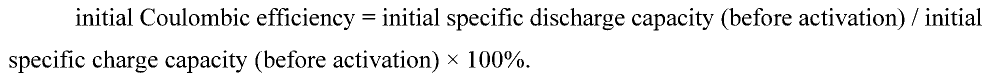 initial Coulombic efficiency = initial specific discharge capacity (before activation) / initial specific charge capacity (before activation) × 100%.

The test results are shown in Table 2.

### (2) Cycle Performance Test

At 25°C room temperature, within a test voltage range of 0.01 V (discharge cutoff voltage) to 1.5 V (charge cutoff voltage), charge-discharge cycling was first performed for 3 cycles at a current density of 0.05 A/g for activation treatment, and cycle performance testing was then conducted: charge-discharge cycling was performed at a current density of 0.5 A/g, and the discharge capacity after 200 cycles was measured. 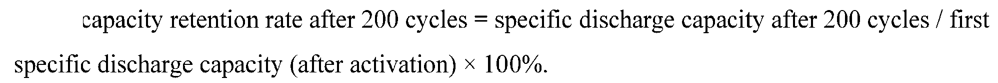 capacity retention rate after 200 cycles = specific discharge capacity after 200 cycles / first specific discharge capacity (after activation) × 100%.

The test results are shown in Table 2.

### (3) Negative Electrode Sheet Swelling Rate

The above coin-type half-cell after 200 cycles is disassembled, and the thickness of the negative electrode material layer after cycling is measured, so that the swelling rate of the negative electrode sheet is calculated, with the calculation formula as follows: $\begin{matrix}negative electrode swelling rate \\ = \frac{\left(negative electrode material layer thickness after cycling-initial negative electrode material layer thickness\right)}{initial negative electrode material layer thickness}\end{matrix}$

The initial negative electrode material layer thickness refers to the thickness of the negative electrode material layer before activation, and the negative electrode material layer thickness after cycling refers to the thickness of the negative electrode material layer after 200 cycles.

### Above results are shown in Table 2.

**Table 1**

| No. | Particle size Dv50 of silicon-containing particle | Core particle size/nm | Thickness of first coating layer/nm | Thickness of second coating layer/nm | Thickness of third coating layer/nm | Ratio of particle size of core to thicknesses of first, second, and third coating layers |
|---|---|---|---|---|---|---|
| Example 1 | 80 | 78 | 18 | 8 | 78 | 1:0.23:0.10:1 |
| Example 2 | 80 | 75 | 12 | 10 | 70 | 1:0.16:0.13:0.93 |
| Example 3 | 80 | 84 | 24 | 5 | 98 | 1:0.29:0.06:1.17 |
| Example 4 | 30 | 32 | 20 | 10 | 65 | 1:0.63:0.31:2.03 |
| Example 5 | 200 | 195 | 15 | 7 | 108 | 1:0.08:0.04:0.55 |
| Example 6 | 80 | 78 | 17 | 11 | 84 | 1:0.22:0.14:1.08 |
| Example 7 | 80 | 83 | 14 | 10 | 79 | 1:0.17:0.12:0.95 |
| Example 8 | 80 | 80 | 16 | 12 | 93 | 1:0.20:0.15:1.16 |
| Example 9 | 80 | 77 | 19 | 9 | 88 | 1:0.25:0.12:1.14 |
| Example 10 | 80 | 81 | 18 | 13 | 103 | 1:0.22:0.16:1.27 |
| Example 11 | 80 | 80 | 17 | 9 | 58 | 1:0.21:0.11:0.73 |
| Example 12 | 80 | 85 | 18 | 10 | 119 | 1:0.21:0.12:1.40 |
| Example 13 | 80 | 74 | 20 | 8 | 65 | 1:0.27:0.11:0.88 |
| Example 14 | 80 | 77 | 16 | 11 | 78 | 1:0.21:0.14:1 |
| Example 15 | 80 | 79 | 19 | 9 | 70 | 1:0.24:0.11:0.89 |
| Example 16 | 80 | 80 | 17 | 7 | 127 | 1:0.21:0.09:1.59 |
| Example 17 | 80 | 80 | 18 | 6 | 105 | 1:0.23:0.08:1.31 |
| Example 18 | 80 | 85 | 14 | 11 | 112 | 1:0.16:0.13:1.32 |
| Comparative Example 1 | 80 | 77 | / | / | / | / |
| Comparative Example 2 | 80 | 78 | / | 14 | 146 | / |
| Comparative Example 3 | 80 | 80 | 17 | / | 132 | / |
| Comparative Example 4 | 80 | 82 | 20 | 12 | / | / |
| Comparative Example 5 | 80 | 80 | 13 | 12 | 94 | 1:0.16:0.15:1.18 |

| | | | | | | |
|---|---|---|---|---|---|---|
| Note: "/" in Table 1 indicates that the parameter is not involved in the specific experiment. | | | | | | |

**Table 2**

| No. | Initial Coulombic efficiency/ % | Initial discharge specific capacity (before activation)/mAh ·g⁻¹ | Specific discharge capacity after 200 cycles/mAh·g⁻¹ | Capacity retention rate after 200 cycles/% | Negative electrode sheet Swelling rate after 200 cycles/% |
|---|---|---|---|---|---|
| Example 1 | 76.4 | 2179 | 1647 | 75.6 | 13.7 |
| Example 2 | 75.2 | 2208 | 1620 | 73.4 | 16.5 |
| Example 3 | 76.8 | 2057 | 1560 | 75.8 | 12.4 |
| Example 4 | 74.7 | 2228 | 1666 | 74.8 | 13.2 |
| Example 5 | 76.2 | 2196 | 1592 | 72.5 | 17.5 |
| Example 6 | 75.0 | 2232 | 1613 | 72.3 | 14.5 |
| Example 7 | 76.2 | 2187 | 1649 | 75.4 | 14.0 |
| Example 8 | 76.0 | 2166 | 1618 | 74.7 | 14.7 |
| Example 9 | 76.8 | 2138 | 1603 | 75.0 | 13.5 |
| Example 10 | 76.3 | 2097 | 1553 | 74.1 | 13.8 |
| Example 11 | 74.3 | 2284 | 1608 | 70.4 | 18.4 |
| Example 12 | 77.0 | 2106 | 1605 | 76.2 | 16.5 |
| Example 13 | 74.8 | 2148 | 1596 | 74.3 | 14.4 |
| Example 14 | 73.4 | 2235 | 1649 | 73.8 | 13.9 |
| Example 15 | 75.5 | 2114 | 1577 | 74.6 | 14.2 |
| Example 16 | 76.4 | 2054 | 1495 | 72.8 | 14.8 |
| Example 17 | 75.8 | 2135 | 1534 | 71.4 | 15.6 |
| Example 18 | 88.4 | 1574 | 1269 | 80.6 | 13.6 |
| Comparative Example 1 | 65.4 | 2742 | 1321 | 48.2 | 33.2 |
| Comparative Example 2 | 70.5 | 2345 | 1529 | 65.2 | 20.7 |
| Comparative Example 3 | 69.3 | 2378 | 1500 | 63.1 | 22.2 |
| Comparative Example 4 | 70.0 | 2267 | 1372 | 60.5 | 23.6 |
| Comparative Example 5 | 70.2 | 2294 | 1468 | 64.0 | 22.5 |

As can be seen from Table 2, the silicon-based composite materials prepared in Examples 1 to 18 of the disclosure include three coating layers. The negative electrode sheets prepared using these materials as negative electrode materials have a low swelling rate, and the resulting lithium-ion batteries exhibit favorable cycle performance and initial Coulombic efficiency, while also achieving favorable capacity performance. Specifically, the swelling rate of the negative electrode sheet after 200 cycles may be as low as 18% or below, the capacity retention rate of the lithium-ion battery after 200 cycles may be as high as 70% or above, and the initial Coulombic efficiency may reach 74% or greater. Based on the above, the first specific discharge capacity (after activation) may reach 1500 mAh·g⁻¹ or greater, and the specific discharge capacity after 200 cycles may reach 1200 mAh·g⁻¹ or greater.

**In** Comparative Example 1, high-purity silicon powder is directly used as the negative electrode material. Although the first specific discharge capacity (after activation) of the resulting lithium-ion battery is relatively high, the swelling rate of the resulting negative electrode sheet is significantly increased, and both the initial Coulombic efficiency and the specific discharge capacity retention rate after 200 cycles of the resulting lithium-ion battery are significantly deteriorated, and the capacity after 200 cycles is also significantly deteriorated.

**In** Comparative Example 2, the silicon-based composite material obtained does not have a first coating layer (amorphous carbon layer). When used as a negative electrode material, although the first specific discharge capacity (after activation) of the resulting lithium-ion battery is relatively good, the swelling rate of the resulting negative electrode sheet is significantly increased, and the initial Coulombic efficiency, capacity retention rate after 200 cycles, and discharge specific capacity after 200 cycles of the resulting lithium-ion battery are all considerably reduced.

**In** Comparative Example 3, the silicon-based composite material obtained does not have a second coating layer (graphite layer). When used as a negative electrode material, although the first specific discharge capacity (after activation) of the resulting lithium-ion battery is relatively high, the swelling rate of the resulting negative electrode sheet is significantly decreased, and the initial Coulombic efficiency, capacity retention rate after 200 cycles, and discharge specific capacity after 200 cycles of the resulting lithium-ion battery are all considerably reduced.

**In** Comparative Example 4, the silicon-based composite material obtained does not have a third coating layer (conductive polymer layer). When used as a negative electrode material, although the first specific discharge capacity (after activation) of the resulting lithium-ion battery is relatively good, the swelling rate of the resulting negative electrode sheet considerably grow, and the initial Coulombic efficiency, capacity retention rate after 200 cycles, and discharge specific capacity after 200 cycles of the resulting lithium-ion battery are all considerably decreased.

**In** Comparative Example 5, the relative positions of the first coating layer and the second coating layer in the silicon-based composite material obtained are changed (a graphite layer is coated on the surface of the core first, and then an amorphous carbon layer is coated). When used as a negative electrode material, although the first discharge specific capacity (after activation) of the lithium-ion battery obtained is relatively good, the swelling rate of the negative electrode sheet obtained is significantly increased, and the initial Coulombic efficiency, the capacity retention rate after 200 cycles, and the specific discharge capacity after 200 cycles of the lithium-ion battery obtained are all significantly decreased.

**In** some preferred examples (Example 1, Example 3, Example 5, Examples 7 to 10, Example 12, Example 16, and Example 18), the lithium-ion batteries obtained using the silicon-based composite material as a negative electrode material have significantly superior initial Coulombic efficiency, which may specifically reach above 76%. In these examples, the carbon source of the amorphous carbon is glucose, the mass ratio of silicon-containing particles to the carbon source of the amorphous carbon is 1:(2-5), the particle size Dv50 of the silicon-containing particles is 80 nm to 200 nm, the carbonization temperature is 900°C to 1200°C, the ratio of the mass of the second precursor to the volume of the monomer of the conductive polymer is 1 g:(2-3 mL), and the monomer of the conductive polymer is aniline or 3,4-ethylenedioxythiophene. The combination of these specific conditions further improves the initial Coulombic efficiency of the resulting silicon-based composite material.

**In** some preferred examples (Example 1, Example 3, Example 7, Example 9, Example 12, and Example 18), the lithium-ion batteries obtained using the silicon-based composite material as a negative electrode material have improved cycle performance, and the capacity retention rate after 200 cycles may specifically reach 75% or greater. In these examples, the mass ratio of the silicon-containing particle to the carbon source of the amorphous carbon is 1:(2-5), the carbonization temperature is 900°C to 1200°C, the sintering temperature is 700°C to 1000°C, the ratio of the mass of the second precursor to the volume of the monomer of the conductive polymer is 1 g:(2-3 mL), the monomer of the conductive polymer is 3,4-ethylenedioxythiophene, and the graphite carbon source gas is propylene or acetylene. The combination of these specific conditions enables the obtained silicon-based composite material to exhibit further improved cycle performance.

In some preferred examples (Example 1, Examples 3 to 4, Example 7, Examples 9 to 10, Example 14, and Example 18), the silicon-based composite material as a negative electrode material may effectively alleviate volume swelling, and the negative electrode sheet swelling rate after 200 cycles may be lower than 14%. In these examples, the particle size Dv50 of the silicon-containing particle is 30 nm to 80 nm, the carbon source of the amorphous carbon is glucose or cellulose, the mass ratio of the silicon-containing particle to the carbon source of the amorphous carbon is 1:(2-5), the carbonization temperature is 900°C to 1200°C, the sintering temperature is 700°C to 1000°C, and the graphite carbon source gas is propylene or acetylene. The combination of these specific conditions enables the obtained silicon-based composite material to be able to effectively alleviate volume swelling.

In some more preferred examples (Example 1, Example 3, Example 7, Examples 9 to 10, and Example 18), through further optimization of process conditions, for example, the mass ratio of silicon-containing particles to the carbon source of amorphous carbon is 1:(2-5), the carbonization temperature is 900°C to 1200°C, the sintering temperature is 700°C to 1000°C, and the graphite carbon source gas is propylene or acetylene, the lithium-ion batteries obtained using the resulting silicon-based composite material as a negative electrode material may achieve improved initial Coulombic efficiency (up to 76% or more) as well as cycle performance (capacity retention rate up to 75% or more after 200 cycles), and may also effectively alleviate volume swelling (the negative electrode sheet swelling rate may be lower than 14% after 200 cycles).

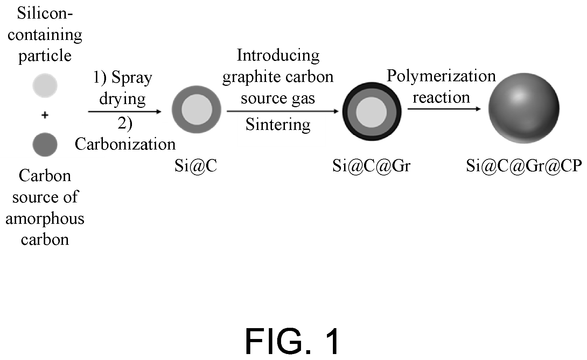

## Claims

1. A silicon-based composite material, comprising a core-shell structure comprising a core and a shell coating a surface of the core, wherein the shell comprises a first coating layer, a second coating layer, and a third coating layer in order from inside to outside, wherein the core is a silicon-containing particle, the first coating layer comprises amorphous carbon, the second coating layer comprises graphite, and the third coating layer comprises a conductive polymer.

2. The silicon-based composite material according to claim 1, wherein the silicon-based composite material satisfies one or both of the following conditions (a) to (b):
(a) the silicon-containing particle is elemental silicon and/or silicon oxide; and
(b) the conductive polymer comprises one or more of poly(3,4-ethylenedioxythiophene), polyaniline, and polypyrrole.

3. The silicon-based composite material according to claim 1, wherein the silicon-based composite material satisfies one or more of the following conditions (a) to (e):
(a) a particle size of the core is 30 nm to 200 nm;
(b) a thickness of the first coating layer is 10 nm to 30 nm;
(c) a thickness of the second coating layer is 2 nm to 15 nm;
(d) a thickness of the third coating layer is 50 nm to 200 nm; and
(e) a ratio of the particle size of the core, the thickness of the first coating layer, the thickness of the second coating layer, and the thickness of the third coating layer is 1:(0.05-1):(0.01-0.6):(0.5-5).

4. A method of preparing a silicon-based composite material, comprising:
S1: performing spray drying on a first slurry to obtain a first precursor, wherein the first slurry comprises silicon-containing particles, a carbon source of amorphous carbon, and a first solvent;
S2: performing carbonization on the first precursor under an inert atmosphere and performing sintering in the presence of a graphite carbon source gas to obtain a second precursor; and
S3: subjecting a second slurry to a polymerization reaction to obtain the silicon-based composite material, wherein the second slurry comprises the second precursor, a monomer of a conductive polymer, an initiator, and a second solvent.

5. The method of preparing the silicon-based composite material according to claim **4,** wherein step S1 satisfies one or more of the following conditions (a) to (f):
(a) the silicon-containing particle is elemental silicon and/or silicon oxide; and
(b) a particle size Dv50 of the silicon-containing particle is 30 nm to 200 nm;
(c) the carbon source of the amorphous carbon comprises one or more of sucrose, glucose, maltose, lactose, chitosan, starch, phenolic resin, epoxy resin, cellulose, lignin, polyvinyl alcohol, polyvinyl chloride, polyethylene oxide, polyurethane, citric acid, and cyclodextrin;
(d) the first solvent comprises one or more of water, methanol, ethanol, isopropanol, tetrahydrofuran, acetonitrile, dichloromethane, chloroform, DMF, DMSO, NMP, acetone, and ethyl acetate;
(e) a mass ratio of the silicon-containing particle to the carbon source of the amorphous carbon is 1:(0.5-5); and
(f) an inlet temperature of the spray drying is 180°C to 250°C, a fan frequency is 20 Hz to 40 Hz, and a feed rate is 5 mL/min to 15 mL/min.

6. The method of preparing the silicon-based composite material according to claim 4, wherein step S2 satisfies one or more of the following conditions (a) to (h):
(a) the inert atmosphere is nitrogen or argon;
(b) a temperature of the carbonization is 800°C to 1200°C;
(c) time of the carbonization is 180 min to 240 min;
(d) the graphite carbon source gas comprises one or more of alkane, alkene, and alkyne gases;
(e) a temperature of the sintering is 600°C to 1000°C;
(f) time of the sintering is 90 min to 180 min;
(g) a volume flow rate of the graphite carbon source gas is 10 sccm to 150 sccm; and
(h) after the sintering, the method further comprises washing and drying.

7. The method of preparing the silicon-based composite material according to claim 4, wherein step S3 satisfies one or more of the following conditions (a) to (i):
(a) the monomer of the conductive polymer comprises one or more of 3,4-ethylenedioxythiophene, aniline, and pyrrole;
(b) the initiator comprises one or more of ammonium persulfate, sodium persulfate, and ferric chloride;
(c) a mass-to-volume ratio of the second precursor to the monomer of the conductive polymer is 1 g:(0.5-3 mL);
(d) a mass ratio of the second precursor to the initiator is 1:(1.5-5);
(e) the second solvent is water;
(f) the polymerization reaction is carried out under stirring conditions;
(g) a temperature of the polymerization reaction is room temperature;
(h) time of the polymerization reaction is 8 h to 14 h; and
(i) after the polymerization reaction, the method further comprises washing and drying.

8. A silicon-based composite material prepared by the method of preparing the silicon-based composite material according to any one of claims 4 to 7.

9. An electrochemical device, wherein a negative electrode sheet of the electrochemical device comprises the silicon-based composite material according to any one of claims 1 to 3 and 8.

10. An electronic apparatus, comprising the electrochemical device according to claim 9.
